# EUROPÄISCHE PATENTSCHRIFT

(11) **EP 1 923 162 B1**
(45) Veröffentlichungstag und Bekanntmachung des Hinweises auf die Patenterteilung: **03.06.2009**
(21) Anmeldenummer: 07033528.6
(22) Anmeldetag: 20.10.2007
(51) Int. Cl.: B23K 7/10, G05D 16/18

(54) **Verfahren und Einrichtung zum Sauerstoff-Brennschneiden von Gießsträngen und Werkstücken aus Stahl in oder nach Stahl-Stranggießanlagen**
Method and device for oxyacetylene cutting of cast strands and workpieces made of steel in or after steel strand casting facilities
Procédé et dispositif pour l'oxycoupage à oxygène de tronçons de coulée et de pièces à usiner en acier dans ou selon des installations de tronçons de coulée

(30) Priorität: 30.10.2006 DE 102006051043
(43) Veröffentlichungstag der Anmeldung: 21.05.2008
(73) Patentinhaber: Aute AG Gesellschaft für autogene Technik, 2068 Hauterive (CH)
(72) Erfinder: Lotz, Horts K., 2068 Hauterive (CH)
(74) Vertreter: Aue, Hans-Peter

(56) Entgegenhaltungen:
- EP-A- 0 129 952
- EP-A- 0 188 763
- EP-A- 0 532 789
- DE-A1- 4 018 066
- US-A- 3 119 409

## Beschreibung

Die Erfindung bezieht sich auf ein Verfahren und eine Einrichtung zum sicheren und sparsamen Sauerstoff-Brennschneiden von Gießsträngen und Werkstücken aus Stahl in kaltem und heißem Zustand in oder nach Stahl-Stranggießanlagen für Blöcke und Brammen gemäß dem Oberbegriffen der Ansprüche 1 und 7. Ein solches Verfahren und eine solche Einrichtung sind aus der DE 40 18 066 A1 bekannt.

Zur Weiterverarbeitung in transportable und den Endprodukten entsprechende Längen müssen endlos vergossene Stränge aus Stahl in Stranggießanlagen unterteilt werden. Diese überwiegend heißen Brammen und Blöcke werden üblicherweise durch Sauerstoffschneidbrenner an einer Brennschneidmaschine abgetrennt. Bei einer solchen Brennschneidmaschine verwandelt ein Sauerstoffschneidstrahl bzw. ein Schneidflamme den auf Zündtemperatur gebrachten Stahl in eine abfließende Oxydschlacke und erzeugt so eine Fuge, die bei Bewegung in einen Schnitt auswächst. Die Konstruktion der Brennscheidmaschine ist speziell auf das Brennschneiden von Rund-, Quadrat- und Rechteckformaten mit Durchmessern und Querschnitten bis etwa 350 mm ausgerichtet.

Um den Druck und die Durchflussmenge des Heizgases und des Heizsauerstoffes für den Schneidbrenner zu steuern, werden Druckminderer verwendet. Der Druckminderer wird nur einmal eingestellt und arbeitet nach dieser Einstellung mit der stets gleichen Gasmenge und dem gleichen Gasdruck. Jedoch wird es meistens notwendig sein, dass in Abhängigkeit von der Art des zu schneidenden Werkstückes (Block oder Bramme) oder der Stahlgüte unterschiedliche Gasdrücke und Gasmengen zum Brennschneiden erforderlich sind.

Die für den Brennschneidvorgang benötigte Schneiddüse wird in den Schneidbrenner eingebaut. Nach dem Zünden des Schneidbrenners beurteilt das Bedienpersonal der Brennschneidmaschine visuell die Schneidflamme nach deren Erfahrungen und regelt gegebenenfalls die Zufuhr, d.h. die Durchflussmenge und den Druck des Heizgases bzw. des Heizsauerstoffes nach. Dies ist sehr zeitaufwändig und führt oft zu qualitativ unzureichenden Schneidflächen am Gießstrang bzw. Werkstück, im Folgenden nur als Werkstück bezeichnet.

Es ist Aufgabe der Erfindung, ein Verfahren und eine Einrichtung der eingangs genannten Art zu schaffen, die ein zeitaufwändiges Regulieren der Schneidflamme des Schneidbrenners vermeiden und eine variable Versorgung des Schneidbrenners mit Heizgas und Heizsauerstoff ermöglichen.

Verfahrensgemäß wird die Aufgabe dadurch gelöst, dass mittels eines Membrane gesteuerten Druckmess- und Druckregelventils mit Druck- und Durchflussumsetzern auf der Basis von vorbestimmten Bezugswerten die Versorgung einer Schneiddüse eines Schneidbrenners mit Heizgas und Heizsauerstoff zur Erzeugung einer optimalen Schneidflamme elektrisch bzw. elektronisch eingestellt, nachgestellt oder abgestellt wird und/oder vorbestimmte maximale Abweichungen von den Bezugswerten erkannt, angezeigt und zur Signalgabe oder zum Abschalten des Schneidbrenners verwendet werden, wobei die Membran durch Einlass- und Auslassventile in einer Ventilkuppel mit einem Druckgas zum Beeinflussen des Gasdurchflusses und des Gasdruckes beaufschlagt wird, so dass eine Öffnung zwischen einer oberen Ventilkammer, in welcher der Druckumsetzer und der Durchflussumsetzer angeordnet ist, und einer unteren Ventilkammer, in welcher der Druckumsetzer angeordnet ist, abhängig von der Bewegung der Membran öffnet oder schließt. Als Heizgas für den Schneidbrenner dient in der Regel Erdgas, Propangas, Koksgas oder Acetylen.

Durch dieses Verfahren wird eine optimale Einstellung der Schneidflamme der Schneiddüse des Schneidbrenners erreicht. Das zeitaufwändige und manchmal fehlerbehaftete Nachregulieren der Durchflussmenge und des Druckes des Heizgases und des Heizsauerstoffes kann entfallen, da diese durch das Membrane gesteuerte Druckmess- und Druckregelventils mit Druck- und Durchflussumsetzern auf der Basis von vorbestimmten Bezugswerten erfolgt. Dadurch wird das Einstellen einer optimalen Schneidflamme des Schneidbrenners automatisiert. Darüber hinaus können durch die optimale Einstellung des Schneidbrenners große Mengen von Heizgas und Heizsauerstoff eingespart werden.

Weitere Merkmale und Vorteile der Erfindung ergeben sich aus den Unteransprüchen.

Bevorzugt wird zum schnellen aber schrittweisen Verändern der Durchflussmenge und des Druckes ein Druckgas auf das Membrane gesteuerte Druckmess- und Druckregelventil über die Membrane zu- und abgeführt, und zwar bis die Druckumsetzer und Durchflussumsetzer die jeweils erreichten Bezugswerte oder deren Abweichungen an eine elektrische bzw. elektronische Steuerung melden. Diese verarbeitet auf der Basis der vorbestimmten Bezugswerte Vergleichs- und Einstell- oder Messwerte zur Steuerung der Veränderung von Zufuhr und Abfuhr des Gases, zur Zustandserkennung und Zustandsmeldung. Auch diese Maßnahme führt zu einer automatischen Einstellung einer optimalen Schneidflamme des Schneidbrenners.

Weiterhin wird die jeweils zu verwendende Schneiddüse des Schneidbrenners mit einer durch einen Eichvorgang bzw. eine Kalibrierung erzeugten Spezifikation für den jeweiligen Düseneinsatz versehen. Diese Spezifikation wird vor oder mit dem in den Schneidbrenner einzubauenden Düseneinsatz von der elektrischen bzw. elektronischen Steuerung als Vergleichs-, Referenz- oder Ausgangswert mittels einer Codierung übernommen.

Dadurch kann bereits vom Hersteller der Brennschneidmaschine, beispielsweise durch ein Eichgerät, auf der Basis von vorbestimmten Bezugswerten die Versorgung einer Schneiddüse eines Schneidbrenners mit dem jeweils notwendigen Druck und der Menge an Heizgas und Heizsauerstoff zur Erzeugung einer optimalen Schneidflamme elektrisch bzw. elektronisch ermittelt, eingestellt und reguliert werden. Die Referenzwerte werden an den Anwender der Brennschneidmaschine weitergegeben und/oder unmittelbar an den Schneidbrenner übertragen.

Demgemäß wird bevorzugt als Codierung für den Vergleichs-, Referenz- oder Ausgangswert zur Einstellung der optimalen Schneidflamme für den Düseneinsatz des Schneidbrenners insbesondere ein Strichcode verwendet und erstellt. Der Strichcode, der den Referenzwert für die Einstellung der Schneidflamme gespeichert hat, kann vom Betreiber der Brennschneidmaschine mittels eines Scanners eingelesen und von der elektrischen bzw. elektronischen Steuerung automatisch am Düseneinsatz eingestellt werden.

Die Aufgabe wird erfindungsgemäß auch durch eine Einrichtung der eingangs genannten Art gelöst, nämlich durch ein Membrane gesteuertes Druckmess- und Druckregelventil mit einem Ventilkörper, der eine obere Ventilkammer und eine untere Ventilkammer aufweist, und mit Ventilkuppel, einem federbelasteten Ventilstößel und mit Druck- und Durchflussumsetzern, die mit einer Steuerung verbunden sind, wobei die Membrane zum schnellen aber schrittweisen Verändern der Gasdurchflussmenge und des Gasdruckes durch ein Magnetventilpaar oder ein Proportionalventil, die mit der Steuerung verbunden sind, an der Ventilkuppel mit einem Druckgas zum Beeinflussen des Gasdurchflusses und Gasdruckes beaufschlagt ist,wobei der Druckumsetzer und der Durchflussumsetzer in der oberen Ventilkammer und der Druckumsetzer in der unteren Ventilkammer angeordnet ist. Als Gas wird hierbei Heizgas und Heizsauerstoff verwendet.

Dabei treffen auf diese Einrichtung die gleichen Vorteile und Wirkungsweisen zu, die zuvor in Bezug auf das erfindungsgemäße Verfahren beschrieben sind. Durch diese Einrichtung wird eine variable Versorgung des Schneidbrenners mit Heizgas und Heizsauerstoff ermöglicht. Wichtig hierbei ist auch, dass statt üblicher statisch einstellbarer Druckminderer für den Schneidbrenner regelbare Druck- und Durchflussumsetzer eingesetzt werden.

Weiterhin ist vorgesehen, dass das Magnetventilpaar oder das Proportionalventil mit einer elektrischen bzw. elektronischen Steuerung verbunden ist, die auf der Basis vorbestimmter Bezugswerte Vergleichs- und Einstell- oder Messwerte zur Steuerung der Veränderung von Zufuhr und Abfuhr des Gases, zur Zustandserkennung und Zustandsmeldung verarbeitet.

Weiterhin ist wichtig, dass jeweils ein Membrane gesteuertes Druckmess- und Druckregelventil für Heizgas und Heizsauerstoff zur Erzeugung einer optimalen Schneidflamme am Schneidbrenner vorzusehen sind.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

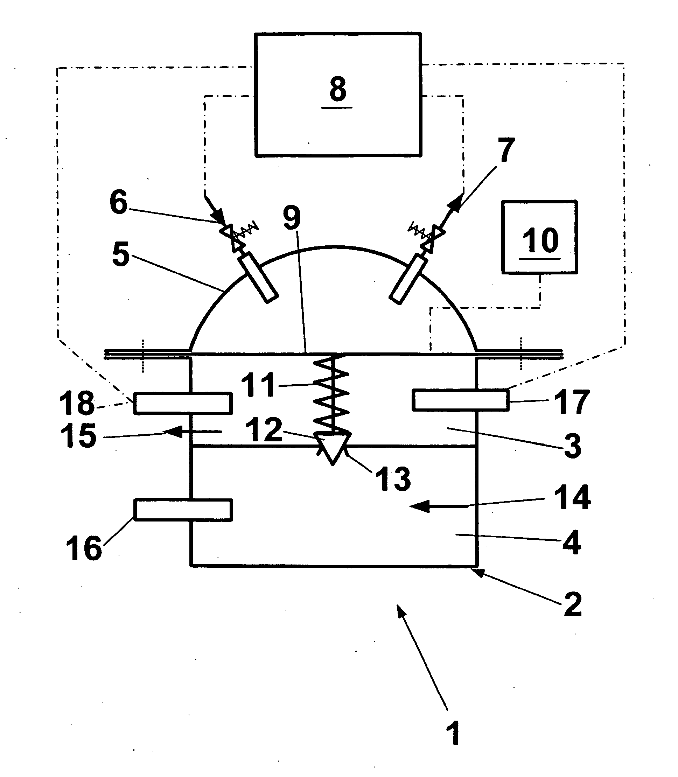

Der der Erfindung zugrunde liegende Gedanke wird in der nachfolgenden Beschreibung anhand eines Ausführungsbeispieles, das in der Zeichnung dargestellt ist, näher beschrieben. Die Zeichnungsfigur zeigt schematisch ein Membrane gesteuertes Druckmess- und Druckregelventil für eine Einrichtungzum sicheren und sparsamen Sauerstoff-Brennschneiden von Gießsträngen und Werkstücken aus Stahl in kaltem und heißem Zustand in oder nach Stahl-Stranggießanlagen für Knüppel, Blöcke und Brammen.

Das Druckmess- und Druckregelventil 1 für Heizgas und Heizsauerstoff umfasst einen Ventilkörper 2 mit einer oberen Ventilkammer 3 und einer unteren Ventilkammer 4. Weiterhin ist am Ventilkörper 2 eine domartige Ventilkuppel 5 aufgesetzt. Diese weist ein Einlassventil 6 und ein Auslassventil 7 auf, die mit einer elektrischen bzw. elektronischen Steuerung 8 verbunden und als Magnetventil oder als Proportionalventil ausgebildet sind.

Zwischen der oberen Ventilkammer 3 und der Ventilkuppel 5 ist eine Membrane 9 angeordnet, die mit einem Vorregler 10 in Verbindung steht, der den Membraneausschlag des Druckmess- und Druckregelventils 1 verändert. Die Membrane 9 wird zum schrittweisen Verändern der Gasdurchflussmenge und des Gasdruckes durch das Einlassventil 6 und das Auslassventil 7 an der Ventilkuppel 5 mit einem Druckgas zum Beeinflussen des Gasdurchflusses und Gasdruckes beaufschlagt.

An der Membrane 9 stützt sich ein mit einer Druckfeder 11 belasteter Ventilstößel 12 ab, der eine Öffnung 13 zwischen der oberen Ventilkammer 3 und der unteren Ventilkammer 4 des Ventilkörpers 2 in Abhängigkeit von der Bewegung der Membrane 9 öffnet und schließt. Dabei erfolgt ein Gaseintritt gemäß Pfeil 14 in die untere Ventilkammer 4 und ein Gasaustritt gemäß Pfeil 15 an der oberen Ventilkammer 3.

In der unteren Ventilkammer 4 sind ein Druckumsetzer 16 und an der oberen Ventilkammer 3 ein Druckumsetzer 17 und ein Durchflussumsetzer 18 angeordnet. Diese sind mit der Steuerung 8 verbunden.

Mit Hilfe des Druckmess- und Druckregelventils 1 wird ein Gasstrom nach vorgegebenem Bezugswert in Durchflussdruck und damit auch in Durchflussmenge über den Gaseintritt 14 bzw. den Gasaustritt 15 gesteuert und geregelt. Der Bezugswert wird erzeugt durch das Zufließen eines Gasstromes mit höherem Druck über das Einlassventil 6 oder das Abfließen des vorhandenen Gases über das Auslassventil 7 zur Erzeugung eines niedrigeren Druckes über die Membrane 9.

Der Differenzdruck über und unter der Membrane 9 verstellt im Zusammenwirken mit der Druckfeder 11 die Öffnung 13 zur Veränderung des durchfließenden Gasstromes, so dass am Gasaustritt 15 die gewünschte Gasmenge mit gewünschtem Druck austritt. Die Druckumsetzer 16,17 und der Durchflussumsetzer 18 verwandeln die festgestellten Gasdrücke und Gasmengen in elektrische Signale, die an die Steuerung 8 weitergegeben werden, die einen Vergleich mit dort gespeicherten Einstellwerten erlaubt, aus dem dann Steuersignale zum Öffnen und Schließen des Einlassventils 6 und des Auslassventils 7 an der Ventilkuppel 5 des Druckmess- und Druckregelventils 1 abgegeben werden.

Liste der Bezugszeichen
- 1: Druckmess- und Druckregelventil
- 2: Ventilkörper
- 3: obere Ventilkammer
- 4: untere Ventilkammer
- 5: Ventilkuppel
- 6: Einlassventil (Magnetventil)
- 7: Auslassventil (Magnetventil)
- 8: Steuerung
- 9: Membrane
- 10: Vorregler
- 11: Druckfeder
- 12: Ventilstößel
- 13: Öffnung
- 14: Gaseintritt
- 15: Gasaustritt
- 16: Druckumsetzer
- 17: Druckumsetzer
- 18: Durchflussumsetzer

## Patentansprüche

1. Verfahren zum sicheren und sparsamen Sauerstoff-Brennschneiden von Gießsträngen und Werkstücken aus Stahl in kaltem und heißem Zustand in oder nach Stahl-Stranggießanlagen für Blöcke und Brammen, **dadurch gekennzeichnet, dass** mittels eines Membrane (9) gesteuerten Druckmess- und Druckregelventils (1) mit Druck-und Durchflussumsetzern (16,17,18) auf der Basis von vorbestimmten Bezugswerten die Versorgung einer Schneiddüse eines Schneidbrenners mit Heizgas und Heizsauerstoff zur Erzeugung einer optimalen Schneidflamme elektrisch bzw. elektronisch eingestellt, nachgestellt oder abgestellt wird und/oder vorbestimmte maximale Abweichungen von den Bezugswerten erkannt, angezeigt und zur Signalgabe oder zum Abschalten des Schneidbrenners verwendet werden, wobei die Membran (9) durch Einlass- und Auslassventile (6,7) in einer Ventilkuppel (5) mit einem Druckgas zum Beeinflussen des Gasdurchflusses und des Gasdruckes beaufschlagt wird, so dass eine Öffnung (13) zwischen einer oberen Ventilkammer (3), in welcher der Druckumsetzer (17) und der Durchflussumsetzer (18) angeordnet ist, und einer unteren Ventilkammer (4), in welcher der Druckumsetzer (16) angeordnet ist, abhängig von der Bewegung der Membran (9) öffnet oder schließt.

2. Verfahren nach Anspruch 1, **dadurch gekennzeichnet, dass** zum schnellen aber schrittweisen Verändern der Durchflussmenge und des Druckes ein Druckgas auf das Membrane (9) gesteuerte Druckmess- und Druckregelventil (1) über die Membrane (9) zu- und abgeführt wird, bis die Druckumsetzer (16,17) und Durchflussumsetzer (18) die jeweils erreichten Bezugswerte oder deren Abweichungen an eine elektrische bzw. elektronische Steuerung (8) melden, die auf der Basis der vorbestimmten Bezugswerte Vergleichs- und Einstell- oder Messwerte zur Steuerung der Veränderung von Zufuhr und Abfuhr des Gases, zur Zustandserkennung und Zustandsmeldung verarbeitet.

3. Verfahren nach Anspruch 1 oder 2, **dadurch gekennzeichnet, dass** die jeweils zu verwendende Schneiddüse des Schneidbrenners mit einer durch einen Eichvorgang bzw. eine Kalibrierung erzeugten Spezifikation für den jeweiligen Düseneinsatz versehen wird, die vor oder mit in dem in den Schneidbrenner einzubauenden Düseneinsatz von der elektrischen bzw. elektronischen Steuerung (8) als Vergleichs-, Referenz- oder Ausgangswert mittels einer Codierung übernommen wird.

4. Verfahren nach Anspruch 3, **dadurch gekennzeichnet, dass** als Codierung für den Vergleichs-, Referenz- oder Ausgangswert zur Einstellung der optimalen Schneidflamme für den Düseneinsatz des Schneidbrenners insbesondere ein Strichcode verwendet wird.

5. Verfahren nach Anspruch 3 oder 4, **dadurch gekennzeichnet, dass** die Codierung für das Einstellen der optimalen Schneidflamme für den Schneidbrenner insbesondere mittels eines Scanners eingelesen und von der elektrischen bzw. elektronischen Steuerung (8) automatisch am Düseneinsatz eingestellt wird.

6. Verfahren nach Anspruch 1, **dadurch gekennzeichnet, dass** als Heizgas für den Schneidbrenner Erdgas, Propangas, Koksgas oder Acetylen verwendet wird.

7. Einrichtung zum sicheren und sparsamen Sauerstoff-Brennschneiden von Gießsträngen und Werkstücken aus Stahl in kaltem und heißem Zustand in oder nach Stahl-Stranggießanlagen für Knüppel, Blöcke und Brammen, **gekennzeichnet durch** ein Membrane (9) gesteuertes Druckmess- und Druckregelventil (8) mit einem Ventilkörper (2), der eine obere Ventilkammer (3) und eine untere Ventilkammer (4) aufweist, und mit Ventilkuppel (5), einem federbelasteten Ventilstößel (12) und mit Druck-und Durchflussumsetzern (16,17,18), die mit einer Steuerung (8) verbunden sind, wobei die Membrane (9) zum schnellen aber schrittweisen Verändern der Gasdurchflussmenge und des Gasdruckes **durch** ein Magnetventilpaar (6,7) oder ein Proportionalventil, die mit der Steuerung (8) verbunden sind, an der Ventilkuppel (5) mit einem Druckgas zum Beeinflussen des Gasdurchflusses und Gasdruckes beaufschlagt ist,wobei der Druckumsetzer (17) und der Durchflussumsetzer (18) in der oberen Ventilkammer (3) und der Druckumsetzer (16) in der unteren Ventilkammer (4) angeordnet ist.

8. Einrichtung nach Anspruch 7, **dadurch gekennzeichnet, dass** das Magnetventilpaar (6,7) oder das Proportionalventil mit einer elektrischen bzw. elektronischen Steuerung (8) verbunden ist, die auf der Basis vorbestimmter Bezugswerte Vergleichs- und Einstell- oder Messwerte zur Steuerung der Veränderung von Zufuhr und Abfuhr des Gases, zur Zustandserkennung und Zustandsmeldung verarbeitet.

9. Einrichtung nach Anspruch 7, **dadurch gekennzeichnet, dass** jeweils ein Membrane (9) gesteuertes Druckmess-und Druckregelventil (1) für Heizgas und Heizsauerstoff zur Erzeugung einer optimalen Schneidflamme am Schneidbrenner vorgesehen sind.

## Claims

1. A method for safe and economical oxygen cutting of cast strands and workpieces out of steel in cold and hot condition in or downstream of continuous steel casting plants for blooms and slabs, **characterized in that** by means of a membrane (9) controlled pressure measuring and pressure regulating valve (1) with pressure and flow converters (16, 17, 18) on the basis of predetermined reference values, supply of a cutting nozzle of a cutting torch with heating gas and heating oxygen for generation of an optimum cutting flame is electrically and/or electronically adjusted, readjusted or shut down and/or predetermined maximum deviations from the reference values are recognized, indicated and used for signalling or cutting torch shutdown with the membrane (9) being charged by inlet and outlet valves (6, 7) in a valve dome (5) with a compressed gas for influencing gas flow and gas pressure so that an opening (13) between an upper valve chamber (3), in which the pressure converter (17) and the flow converter (18) is arranged, and a lower valve chamber (4), in which the pressure converter (16) is arranged, opens and closes dependent on the membrane (9) motion.

2. A method according to claim 1, **characterized in that** for rapid but stepwise modification of flow and pressure, a compressed gas is supplied to and discharged from the membrane (9) controlled pressure measuring and regulating valve (1) via the membrane (9) until the pressure (16, 17) and flow converters (18) report the reference values achieved or their
deviations to an electric and/or electronic control system (8), which processes on the basis of predetermined reference values, comparative values and adjustment values or measured values for controlling the variation of gas supply and discharge, for state detection and information.

3. A method according to claim 1 or 2, **characterized in that** the cutting nozzle of the cutting torch to be used in each case is provided with a specification for the respective nozzle insert created by a calibration process which is adopted prior to or with the nozzle insert to be integrated into the cutting torch by the electric and/or electronic control system as a comparative, reference or initial value by means of coding.

4. A method according to claim 3, **characterized in that** in particular a bar code is used as a coding for the comparative, reference or initial value for adjustment of the optimum cutting flame for the nozzle insert of the cutting torch.

5. A method according to claim 3 or 4, **characterized in that** the coding for optimum cutting flame adjustment for the cutting torch will be read in especially by means of a scanner and is automatically adjusted on the nozzle insert by the electric and/or electronic control system.

6. A method according to claim 1, **characterized in that** natural gas, propane gas, coke gas or acetylene is used as a heating gas for the cutting torch.

7. A means for safe and economical oxygen cutting of cast strands and workpieces out of steel in cold and hot condition in or downstream of continuos steel casting plants for billets, blooms and slabs, **characterized by** a membrane (9) controlled pressure measuring and pressure regulating valve (1) with a valve body (2) having an upper (3) and a lower valve chamber (4), and with valve dome (5), a spring-loaded push rod (12) and with pressure and flow converters (16, 17, 18) associated with a control system (8) with the membrane (9) on the valve dome (5) being charged with a compressed gas for influencing gas flow and gas pressure for rapid but stepwise modification of the gas flow quantity and gas pressure by a pair of solenoid valves (6, 7) or a proportional valve associated with the control system (8), with the pressure converter (17) and flow converter (18) being arranged in the upper valve chamber (3) and the pressure converter (16) being arranged in the lower valve chamber.

8. A means according to claim 7, **characterized in that** the pair of solenoid valves (6, 7) or the proportional valve is associated with an electric and/or electronic control system (8), processing comparative and adjustment or measured values on the basis of predetermined reference values for controlling variation of supply and discharge of the gas, for state detection and state information.

9. A means according to claim 7, **characterized in that** each one membrane (9) controlled pressure measuring and pressure regulating valve (1) for heating gas and heating oxygen is provided for generating an optimum cutting flame on the cutting torch.

## Revendications

1. Procédé pour l'oxycoupage sûr et économique de barres de coulée et de pièces en acier à l'état froid et chaud, à l'intérieur ou à la suite d'installations de coulée continue d'acier pour lingots et brames, **caractérisé par le fait que** - au moyen d'une soupape de mesure de pression et de régulation de pression (1) commandée par membrane (9) et comprenant des convertisseurs de pression et de débit (16, 17, 18), et à partir de valeurs de référence prédéterminées - l'alimentation en gaz de chauffe et en oxygène de chauffe d'une buse de coupage d'un chalumeau oxycoupeur est réglée, rajustée ou arrêtée électriquement ou bien électroniquement pour produire une flamme découpante optimale, et/ou des écarts maximaux prédéterminés desdites valeurs de référence sont détectés, indiqués et utilisés pour fournir un signal ou pour arrêter le chalumeau oxycoupeur, ladite membrane (9) étant soumise à un gaz sous pression par l'intermédiaire de soupapes d'admission et d'évacuation (6, 7) dans une coupole de soupape (5), pour influer sur le débit de gaz et sur la pression de gaz, de sorte qu'une ouverture (13) située entre une chambre supérieure de soupape (3) où sont disposés ledit convertisseur de pression (17) et le convertisseur de débit (18), et une chambre inférieure de soupape (4) dans laquelle est disposé le convertisseur de pression (16), s'ouvre ou se ferme en fonction du mouvement de ladite membrane (9).

2. Procédé selon la revendication 1, **caractérisé par le fait que**, pour changer rapidement, mais graduellement le débit et la pression, un gaz sous pression est amené à et évacué de la soupape de mesure de pression et de régulation de pression (1) commandée par membrane (9), via ladite membrane (9) jusqu'à ce que les convertisseurs de pression (16, 17) et le convertisseur de débit (18) communiquent les valeurs de référence respectivement atteintes ou les écarts de celles-ci à une commande électrique ou bien électronique (8) qui, à partir des valeurs de référence prédéterminées, traite des valeurs de comparaison et de réglage ou de mesure pour la commande du changement de l'admission et de l'évacuation du gaz, pour la reconnaissance d'état et pour l'information d'état.

3. Procédé selon la revendication 1 ou 2, **caractérisé par le fait que** la buse de coupage à utiliser respectivement du chalumeau oxycoupeur sera pourvue d'une spécification pour l'insert de buse respectif, qui est générée par un processus d'étalonnage ou bien par un calibrage et qui sera reprise, avant ou avec l'insert de buse à monter dans le chalumeau oxycoupeur, par ladite commande électrique ou bien électronique (8) en tant que valeur de comparaison, de référence ou initiale au moyen d'un codage.

4. Procédé selon la revendication 3, **caractérisé par le fait que** le codage utilisé pour la valeur de comparaison, de référence ou initiale afin de régler la flamme découpante optimale pour l'insert de buse du chalumeau oxycoupeur est, en particulier, un code barre.

5. Procédé selon la revendication 3 ou 4, **caractérisé par le fait que** le codage pour le réglage de la flamme découpante optimale pour le chalumeau oxycoupeur est lu en particulier au moyen d'un scanner et sera réglé automatiquement sur l'insert de buse par ladite commande électrique ou bien électronique (8).

6. Procédé selon la revendication 1, **caractérisé par le fait que** le gaz de chauffe utilisé pour le chalumeau oxycoupeur est du gaz naturel, du gaz propane, du gaz de coke ou de l'acétylène.

7. Dispositif pour l'oxycoupage sûr et économique de barres de coulée et de pièces en acier à l'état froid et chaud, à l'intérieur ou à la suite d'installations de coulée continue d'acier pour billettes, lingots et brames, **caractérisé par** une soupape de mesure de pression et de régulation de pression (1) qui est commandée par membrane (9) et qui comprend un corps de soupape (2) présentant une chambre supérieure de soupape (3) et une chambre inférieure de soupape (4), et une coupole de soupape (5), un poussoir de soupape (12) chargé par ressort ainsi que des convertisseurs de pression et de débit (16, 17, 18) qui sont reliés à une commande (8) ; pour changer rapidement, mais graduellement le débit de gaz et la pression de gaz, ladite membrane (9) étant soumise à un gaz sous pression par l'intermédiaire d'une paire d'électrovannes (6, 7) ou d'une soupape proportionnelle reliées à ladite commande (8) et disposées sur ladite coupole de soupape (5), pour influer sur le débit de gaz et sur la pression de gaz, ledit convertisseur de pression (17) et ledit convertisseur de débit (18) étant disposés dans la chambre supérieure de soupape (3) et ledit convertisseur de pression (16) étant disposé dans la chambre inférieure de soupape (4)

8. Dispositif selon la revendication 7, **caractérisé par le fait que** la paire d'électrovannes (6, 7) ou la soupape proportionnelle est reliée à une commande électrique ou bien électronique (8) qui, à partir de valeurs de référence prédéterminées, traite des valeurs de comparaison et de réglage ou de mesure pour la commande du changement de l'admission et de l'évacuation du gaz, pour la reconnaissance d'état et pour l'information d'état.

9. Dispositif selon la revendication 7, **caractérisé par le fait que** l'on prévoit respectivement une soupape de mesure de pression et de régulation de pression (1) commandée par membrane (9), pour le gaz de chauffe et l'oxygène de chauffe pour produire une flamme découpante optimale sur le chalumeau oxycoupeur.
